# EUROPÄISCHE PATENTSCHRIFT

(11) **EP 4 034 341 B1**
(45) Veröffentlichungstag und Bekanntmachung des Hinweises auf die Patenterteilung: **07.02.2024**
(21) Anmeldenummer: 20768069.5
(22) Anmeldetag: 14.09.2020
(51) Int. Cl.: B25F 1/00, B25F 5/02

(54) **ROBUSTE KOMMUNIKATION**
ROBUST COMMUNICATION
COMMUNICATION ROBUSTE

(30) Priorität: 23.09.2019 EP 19198849
(43) Veröffentlichungstag der Anmeldung: 03.08.2022
(73) Patentinhaber: Hilti Aktiengesellschaft, 9494 Schaan (LI)
(72) Erfinder: HAUSER, Klaus, 86830 Schwabmünchen (DE); KOSCHECK, David, 86163 Augsburg (DE); MAYER, Stefan, 86857 Hurlach (DE); CANDUSSIO, Michael, 82140 Olching (DE)
(74) Vertreter: Hilti Aktiengesellschaft Corporate Intellectual Property
(86) Internationale Anmeldenummer: PCT/EP2020/075637
(87) Internationale Veröffentlichungsnummer: WO 2021/058311

(56) Entgegenhaltungen:
- EP-A1- 3 454 407
- WO-A1-2019/048277
- JP-A- 6 075 146

## Beschreibung

Die vorliegende Erfindung betrifft eine Werkzeugmaschine mit wenigstens einer Steuerungseinrichtung.

Darüber hinaus betrifft die vorliegende Erfindung ein System enthaltend eine Werkzeugmaschine mit wenigstens einer Steuerungseinrichtung und einen Akkumulator mit wenigstens einer Steuerungselektronik, wobei der Akkumulator zur Versorgung der Werkzeugmaschine mit elektrischer Energie ausgestaltet ist.

Moderne Werkzeugmaschinen, wie beispielsweise Bohrhämmer, Sägen, Schleifgeräte oder dergleichen, verfügen mittlerweile über zahlreiche Komponenten (z.B. Motoreinheit, Getriebeeinheit, Transceiver, Mikrocontroller, etc.), welche eine Vielzahl an Informationen und Daten in Form von Signalen miteinander austauschen. Insbesondere zwischen einer Werkzeugmaschine und einem als Energieversorgung vorgesehenen Akkumulator findet mittlerweile ein hoher Informations- und Datenaustausch statt.

Zum Datenaustausch (d.h. Senden und Empfangen von Informationen) dienen verschiedene Kommunikationsnetzwerke bzw. Kommunikationsschaltkreise. Die Kommunikation zwischen den einzelnen Komponenten, d.h. der Datenaustausch, funktioniert für gewöhnlich ohne Probleme, wenn sich die Werkzeugmaschine in einem Ruhezustand befindet. In dem Ruhezustand ist die Werkzeugmaschine nicht aktiviert und nur relativ wenig elektrische Energie (d.h. niedrige Stromwerte bzw. Stromstärke) wird dem Antrieb zugeführt.

Im Gegensatz dazu wird in einem Arbeitsmodus der Werkzeugmaschine relativ viel elektrische Energie (d.h. hohe Stromwerte bzw. Stromstärke) zugeführt, um eine hohe Leistungsabgabe der Werkzeugmaschine zu erzeugen.

Durch hohe Stromwerte und vor allem sich relativ schnell verändernde Stromwerte (d.h. eine starke Fluktuation) entsteht jedoch eine ungewollte Störeinkopplung (beispielsweise induktive Einkopplung, kapazitive Einkopplung, elektromagnetische Strahlung und/oder leitungsgebundene Störungen) auf benachbarte Signalleitung in dem Kommunikationsnetzwerk. Da die technischen Maßnahmen für eine geeignete Störunempfindlichkeit an den Kommunikationsnetzwerken für gewöhnlich einen hohen Aufwand und gestiegene Kosten verursachen, wird als Folge hieraus auf eine Kommunikation zwischen den Komponenten während des Betriebs (d.h. im

Aktivierungsmodus) der Werkzeugmaschine verzichtet. EP 3 454 407 A1 offenbart den Oberbegriffe der Ansprüche 1 und 5.

Aufgabe der vorliegenden Erfindung ist es daher, eine Werkzeugmaschine sowie ein System enthaltend eine Werkzeugmaschine und einen Akkumulator bereitzustellen, mit dem das vorstehend genannte Problem gelöst und eine robuste Kommunikation während des Betriebs der Werkzeugmaschine bzw. des Systems erreicht werden kann.

Die Aufgabe wird gelöst durch den Gegenstand des unabhängigen Anspruchs 1 und 5. Weitere vorteilhafte Ausgestaltungsformen der Erfindung finden sich in den entsprechenden Unteransprüchen.

Die Aufgabe wird insbesondere gelöst durch eine Werkzeugmaschine mit wenigstens einer Steuerungseinrichtung.

Erfindungsgemäß enthält die Werkzeugmaschine wenigstens einen Kommunikationsschaltkreis zum Austausch von Signalen in einem Halbduplex-Betrieb mit einer ersten und zweiten Kommunikationsleitung für eine differentielle Kommunikation zwischen wenigstens einem ersten sowie zweiten Transceiver. Hierdurch ist eine robuste und störunempfindliche Kommunikation auch während des Betriebs der Werkzeugmaschine ermöglicht.

Das Bauteil Transceiver kann auch als Sendeempfänger oder Mikrocontroller bezeichnet werden. Darüber hinaus ist es auch möglich, dass anstelle eines ersten und zweiten Transceiver entsprechend ein erstes und zweites Steuergerät oder ein oder ein erster und zweiter Mikrocontroller für die differentielle Kommunikation vorgesehen sind.

Gemäß einer vorteilhaften Ausführungsform der vorliegenden Erfindung kann es möglich sein, dass eine erste Differenzspannung bei der differentiellen Kommunikation für einen ersten Zustand zwischen 1,5 bis 3 Volt liegt und eine zweite Differenzspannung für einen zweiten Zustand zwischen -0,5 bis 0,5 Volt liegt. Die erste Spannungsdifferenz kann insbesondere einem Wert von 2 Volt und die zweite Spannungsdifferenz kann insbesondere einem Wert von 0 Volt entsprechend.

Der erste Zustand bei der differentiellen Kommunikation kann auch als dominanter oder hoher Zustand bezeichnet werden. Des Weiteren kann der zweite Zustand bei der differentiellen Kommunikation auch als rezessiver oder niedriger Zustand bezeichnet werden.

Entsprechend einer vorteilhaften Ausführungsform der vorliegenden Erfindung kann es möglich sein, dass wenigstens ein Akkumulator als Energieversorgung der Werkzeugmaschine vorgesehen ist und ein maximaler Spannungswert in dem ersten Zustand bis zu 12 Volt gegenüber dem Massepotential des Akkumulators beträgt.

Das Massepotential des Akkumulators kann auch als Ground, Potential Null oder Masse bezeichnet werden.

Gemäß einer vorteilhaften Ausführungsform der vorliegenden Erfindung kann es möglich sein, dass der wenigstens erste Transceiver in der Werkzeugmaschine und der wenigstens zweite Transceiver in dem Akkumulator positioniert ist.

Des Weiteren wird die Aufgabe gelöst durch ein System enthaltend eine Werkzeugmaschine mit wenigstens einer Steuerungseinrichtung und einen Akkumulator mit wenigstens einer Steuerungselektronik, wobei der Akkumulator zur Versorgung der Werkzeugmaschine mit elektrischer Energie ausgestaltet ist.

Erfindungsgemäß enthält wenigstens einen Kommunikationsschaltkreis zum Austausch von Signalen in einem Halbduplex-Betrieb mit einer ersten und zweiten Kommunikationsleitung für eine differentielle Kommunikation zwischen wenigstens einem ersten sowie zweiten Transceiver. Hierdurch ist eine robuste und störunempfindliche Kommunikation auch während des Betriebs des Systems ermöglicht.

Das Bauteil Transceiver kann auch als Sendeempfänger oder Mikrocontroller bezeichnet werden. Darüber hinaus ist es auch möglich, dass anstelle eines ersten und zweiten Transceiver entsprechend ein erstes und zweites Steuergerät oder ein oder ein erster und zweiter Mikrocontroller für die differentielle Kommunikation vorgesehen sind.

Entsprechend einer vorteilhaften Ausführungsform der vorliegenden Erfindung kann es möglich sein, dass der wenigstens erste Transceiver in der Werkzeugmaschine und der wenigstens zweite Transceiver in dem Akkumulator positioniert ist.

Gemäß einer vorteilhaften Ausführungsform der vorliegenden Erfindung kann es möglich sein, dass sowohl der wenigstens erste und zweite Transceiver in der Werkzeugmaschine positioniert ist.

Entsprechend einer vorteilhaften Ausführungsform der vorliegenden Erfindung kann es möglich sein, dass eine erste Differenzspannung bei der differentiellen Kommunikation für einen ersten Zustand zwischen 1,5 bis 3 Volt liegt und eine zweite Differenzspannung für einen zweiten Zustand zwischen -0,5 bis 0,5 Volt liegt.

Der erste Zustand bei der differentiellen Kommunikation kann auch als dominanter oder hoher Zustand bezeichnet werden. Des Weiteren kann der zweite Zustand bei der differentiellen Kommunikation auch als rezessiver oder niedriger Zustand bezeichnet werden.

Gemäß einer vorteilhaften Ausführungsform der vorliegenden Erfindung kann es möglich sein, dass ein maximaler Spannungswert in dem ersten Zustand bis zu 12 Volt gegenüber dem Massepotential des Akkumulators beträgt.

Die erste und zweite Kommunikationsleitung für eine differentielle Kommunikation zwischen dem Akkumulator und der Werkzeugmaschine sind Bestandteile eines Kommunikationssystems. Das Kommunikationssystem kann dabei als CAN-Datenbus ausgestaltet sein. Es ist jedoch auch möglich, dass ein anderes geeignetes Kommunikationssystem für eine differentielle Kommunikation zwischen dem Akkumulator und der Werkzeugmaschine verwendet wird.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen, ohne vom Umfang der Erfindung abzuweichen, wie er in den beigefügten Ansprüchen definiert ist.

Es zeigen:
- Figur 1: einen Querschnitt durch ein erfindungsgemäßes System enthaltend eine Werkzeugmaschine mit einem angeschlossenen Akkumulator als Energieversorgung;
- Figur 2: einen Querschnitt durch ein Fussteil der erfindungsgemäßen Werkzeugmaschine mit einem angeschlossenen Akkumulator;
- Figur 3: eine erste grafische Darstellung der verschiedenen Spannungspegel in einem ersten und zweiten Zustand bei der differentiellen Kommunikation in dem erfindungsgemäßen System;
- Figur 4: eine zweite grafische Darstellung der verschiedenen Spannungspegel in dem ersten und zweiten Zustand bei der differentiellen Kommunikation in dem erfindungsgemäßen System; und
- Figur 5: eine dritte grafische Darstellung der verschiedenen Spannungspegel in dem ersten und zweiten Zustand bei der differentiellen Kommunikation in dem erfindungsgemäßen System.

### Ausführungsbeispiele:

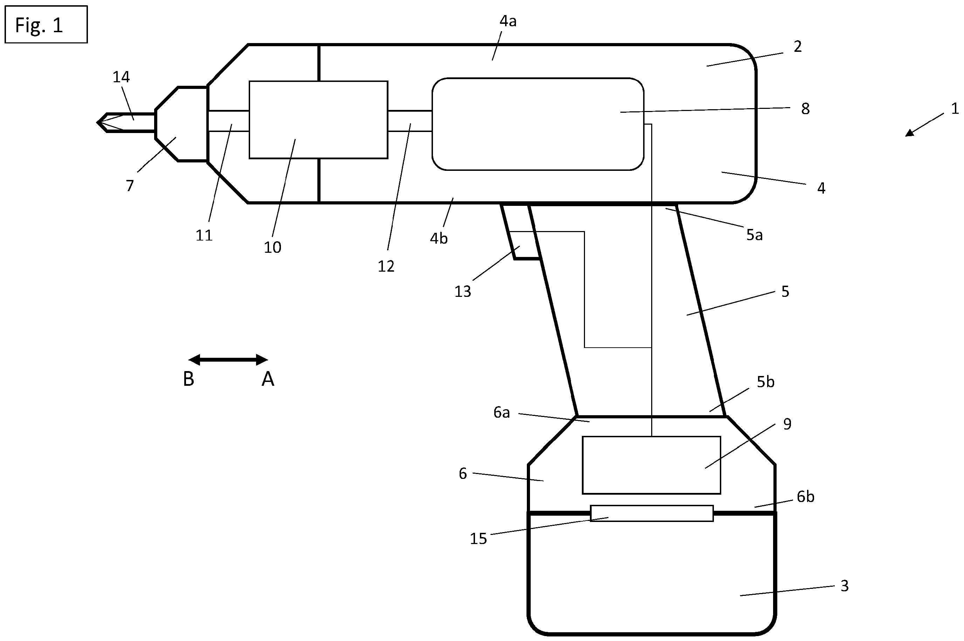

In Figur 1 ist ein erfindungsgemäßes System 1 mit einer Werkzeugmaschine 2 und einem Akkumulator 3 dargestellt. Der Akkumulator 3 ist mit der Werkzeugmaschine verbunden und dient zur Versorgung der elektrischen Verbraucher der Werkzeugmaschine 2 mit elektrischer Energie. Bei der Versorgung fließt elektrischer Strom von dem Akkumulator 3 zu der Werkzeugmaschine 2. Der Akkumulator kann auch als Akku oder Batterie bezeichnet werden.

Gemäß einer alternativen Ausgestaltungsform der vorliegenden Erfindung kann die Versorgung der Werkzeugmaschine 2 mit elektrischer Energie nicht durch einen Akkumulator, sondern durch einen Netzwerkanschluss erfolgen. Den Netzwerkanschluss kann man auch als Stromkabel bezeichnen. Diese alternative Ausgestaltungsform der vorliegenden Erfindung ist in den Figuren nicht gezeigt.

Wie in Figur 1 dargestellt, ist die Werkzeugmaschine 2 in Form eines Akku-Schraubers dargestellt. Gemäß anderer alternativer Ausführungsformen kann die Werkzeugmaschine 2 auch in Form einer Bohrmaschine, einer Säge, eines Schleifgeräts oder dergleichen ausgestaltet sein.

Die als Akku-Schrauber ausgestaltete Werkzeugmaschine 2 enthält im Wesentlichen ein Gehäuse 4, ein Handgriff 5, ein Fussteil 6, eine Werkzeugaufnahme 7, einen elektrischen Antrieb 8 in Form eines Elektromotors, eine Steuerungseinrichtung 9, ein Getriebe 9a, eine Antriebswelle 11, eine Abtriebswelle 12 und einen Aktivierungsschalter 13.

Der als Elektromotor ausgestaltet elektrische Antrieb 8, das Getriebe 10, die Antriebswelle 11, die Abtriebswelle 12 und die Steuerungseinrichtung 9 sind in dem Gehäuse 4 positioniert. Der Antrieb 8, das Getriebe 10, die Antriebswelle 11 und die Abtriebswelle 12 sind so zueinander und in dem Gehäuse 10 positioniert, dass ein von dem Antrieb 8 erzeugtes Drehmoment an die Abtriebswelle 12 übertragen wird. Die Abtriebswelle 12 überträgt das Drehmoment auf das Getriebe 10, welches wiederum ein Drehmoment an die Antriebswelle 11 weitergibt. Über die Antriebswelle 11 wird durch Übertragung des Drehmoments die Werkzeugaufnahme 7 angetrieben. Wie in Figur 1 dargestellt, ist in der Werkzeugaufnahme 7 ein Werkzeug 14 in Form eines Bits gehalten. Mit Hilfe des Bits kann eine Schraube in einen Werkstoff eingeschraubt werden. Weder die Schraube noch der Werkstoff sind in den Figuren dargestellt.

Wie weiterhin in Figur 1 gezeigt, enthält das Gehäuse 4 eine Oberseite 4a und eine Unterseite 4b. Der Handgriff 5 enthält ein erstes Ende 5a und ein zweites Ende 5b. An der Unterseite 4b des Gehäuses 4 ist das erste Ende 5a des Handgriffs 5 befestigt. Des Weiteren enthält das Fussteil 6 ein oberes Ende 6a und ein unteres Ende 6b. Das obere Ende 6a des Fussteils 6 ist an dem zweiten Ende 5b des Handgriffs 5 befestigt. Das untere Ende 6b des Fussteils 6 enthält eine mechanische, elektrische und elektronische Schnittstelle 15 und dient zum mechanischen, elektrischen und elektronischen Verbinden mit dem Akkumulator 3. Zur Aufnahme von elektrischen Strom enthält die Schnittstelle 15 eine Anzahl an Stromanschlüssen 16. Die Schnittstelle 15 enthält darüber hinaus Datenanschlüsse 17 zum Senden und Empfangen von Signalen zwischen der Werkzeugmaschine 2 und dem Akkumulator 3.

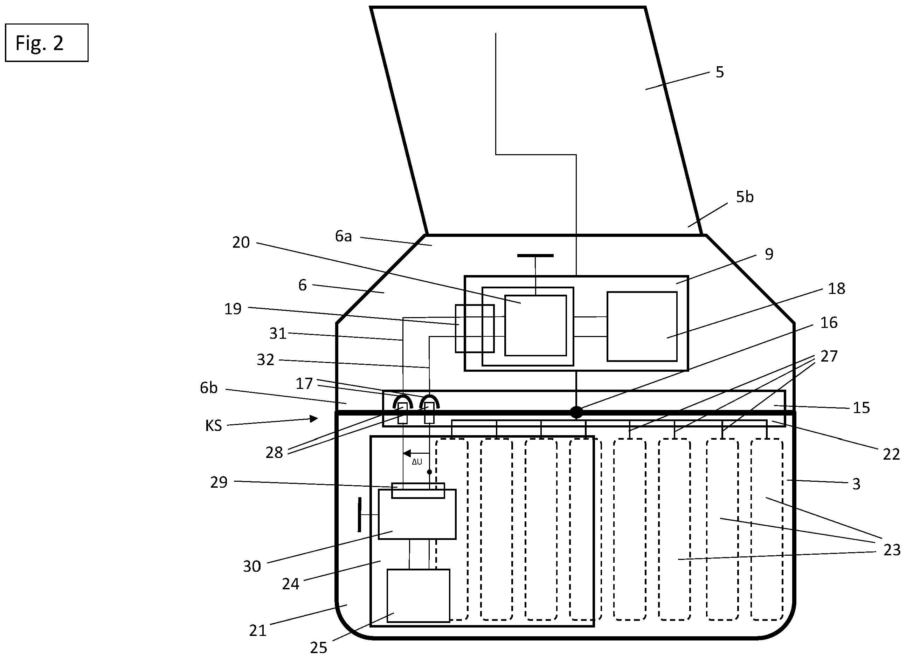

Wie den Figuren 1 und 2 zu entnehmen ist, ist die Steuerungseinrichtung 9 der Werkzeugmaschine 2 in dem Fussteil 6 der Werkzeugmaschine 2 positioniert. Die Steuerungseinrichtung 9 der Werkzeugmaschine 2 dient zum Steuern und Regeln verschiedener Vorgänge in Bezug auf die Werkzeugmaschine 2 sowie in Bezug auf den Akkumulator 3. Die Steuerungseinrichtung 9 steuert insbesondere den Strom bzw. die Stromstärke, die von dem Akkumulator 3 zu der Werkzeugmaschine 2 und insbesondere zum Antreiben des als Elektromotor ausgebildeten Antriebs 8 fließt.

Die Steuerungseinrichtung 9 der Werkzeugmaschine 2 enthält dabei einen Mikrocontroller 18 (auch als MCU bezeichnet) sowie eine Datenschnittstelle 19 mit einem ersten Transceiver 20 als Bestandteil eines Kommunikationsschaltkreises KS für eine differentielle Kommunikation zwischen dem Akkumulator 3 und der Werkzeugmaschine 2. Die Datenschnittstelle 19 der Werkzeugmaschine 2 ist dabei eine von insgesamt zwei Datenschnittstellen zu dem Kommunikationsschaltkreis KS für die differentielle Kommunikation zwischen dem Akkumulator 3 und der Werkzeugmaschine 2. Wie nachfolgend noch beschreiben ist enthält der Akkumulator 3 die andere der beiden Datenschnittstelle 29.

Der Akkumulator 3 enthält im Wesentlichen ein Gehäuse 21 mit einer Akku-Schnittstelle 22. In dem Gehäuse 21 des Akkumulators 3 sind eine Vielzahl an Energiespeicherzellen 23 sowie eine Steuerungselektronik 24 mit einem Mikrocontroller 25.

Der Akkumulator 3 enthält des Weiteren eine Datenschnittstelle 29 mit einem zweiten Transceiver 30 als Bestandteil eines Kommunikationsschaltkreises KS für eine differentielle Kommunikation zwischen dem Akkumulator 3 und der Werkzeugmaschine 2.

Die Energiespeicherzellen 23 können auch als Akku-Zellen bezeichnet werden und dienen zum Aufnehmen, Speichern und Bereitstellen einer elektrischen Energie bzw. einer elektrischen Spannung.

Die Akku-Schnittstelle 22 ist an einer Seite des Gehäuses 21 positioniert. Die Akku-Schnittstelle 22 enthält eine Anzahl an Stromsteckern 27 zum Aufnehmen und Abgeben von elektrischem Strom sowie Datensteckern 28 zum Senden und Empfangen von Signalen zwischen der Werkzeugmaschine 2 und dem Akkumulator 3. Über die Stromstecker 27 kann der elektrische Strom von den Energiespeicherzellen 23 abgegeben werden.

Wie in Figur 1 und 2 gezeigt, sind die Stromstecker 27 des Akkumulators 3 mit den Stromanschlüssen 16 der Werkzeugmaschine 2 verbunden. Ebenso sind die Datenstecker 28 des Akkumulators 3 mit den Datenanschlüssen 17 der Werkzeugmaschine 2 verbunden.

Durch die Verbindung kann elektrischer Strom von den Energiespeicherzellen 23 des Akkumulators 3 zu der Werkzeugmaschine 2 fließen. Des Weiteren können Signale zur Kommunikation zwischen dem Akkumulator 3 und der Werkzeugmaschine 2 ausgetauscht werden.

Wie der Figur 1 zu entnehmen ist, ist der Aktivierungsschalter 13 an einer 5c Vorderseite des Handgriffs 5 positioniert. Durch ein Bewegen des Aktivierungsschalters 13 in Richtung A kann ein Signal von dem Aktivierungsschalter 13 an die Steuerung 9 gesendet werden, wodurch die Steuerung 9 wiederum ein Signal an die Steuerungselektronik 24 des Akkumulators 3 sendet. Durch das an die Steuerungselektronik 24 gesendete Signal wird elektrische Energie bzw. elektrischer Strom mit einem bestimmten Stromwert von dem Akkumulator 3 für den elektrischen Verbraucher der Werkzeugmaschine 2 und insbesondere den als Elektromotor ausgebildeten Antrieb 8 freigegeben. Die Werkzeugmaschine 2 hat eine (nicht gezeigte) Stromeinrichtung, mit der die Stromstärke des Versorgungstroms gemessen werden kann. Wenn ein Versorgungsstrom mit einer zulässigen Stromstärke gemessen wird, kann der Versorgungsstrom zu den elektrischen Verbrauchern der Werkzeugmaschine 2 fliessen. Alternativ oder zusätzlich kann die Strommesseinrichtung auch in dem Akkumulator 3 positioniert sein.

Um ein Signal entsprechend der Wegstrecke des Aktivierungsschalters 13 in Richtung A an die Steuerung 9 zu senden, enthält der Aktivierungsschalter 13 ein nicht gezeigtes Potentiometer, auch Poti genannt.

Wenn sich der Aktivierungsschalter 13 wieder in Richtung B bewegt, wird ein entsprechendes Signal mit Hilfe des (nicht gezeigten) Potentiometers an die Steuerung 9 gesendet, sodass kein elektrischer Strom (und damit keine elektrische Energie) mehr vom Akkumulator 3 zu der Werkzeugmaschine 2 fließt.

Die differentielle Kommunikation zwischen dem Akkumulator 3 und der Werkzeugmaschine 2 erfolgt über einen Kommunikationsschaltkreis KS. Zur Teilnahme an dem Kommunikationsschaltkreis KS enthält sowohl der Akkumulator 3 als auch die Werkzeugmaschine 2 jeweils eine Datenschnittstelle 19, 29 mit einem Transceiver 20, 30. Die Transceiver 20, 30 können dabei als CAN-Transceiver ausgestaltet sein. Wie in Figur 2 angedeutet ist der Transceiver 20 der Werkzeugmaschine über die Datenschnittstelle und einer ersten Kommunikationsleitung 31 (auch als COM-High-Leitung bezeichnet) sowie einer zweiten Kommunikationsleitung 32 (auch als COM-Low-Leitung bezeichnet) und der Datenschnittstelle 29 mit dem Transceiver 30 des Akkumulators 3 verbunden.

Gemäß einer alternativen Ausgestaltungsform der vorliegenden Erfindung, welche nicht in den Figuren dargestellt ist, kann der Kommunikationsschaltkreis KS mit einem ersten und zweiten Transceiver leidglich in dem Gehäuse 4 der Werkzeugmaschine 2 positioniert sein. Hierdurch findet die differentielle Kommunikation lediglich innerhalb der Werkzeugmaschine, d.h. zwischen Komponenten der Werkzeugmaschine 2 statt.

Der Transceiver 20 der Werkzeugmaschine 2 kann Signale (z.B. ein Bit) über die Datenschnittstelle 19, die erste und zweite Kommunikationsleitung 31, 32 an die Datenschnittstelle 29 und den Transceiver 30 des Akkumulators 3 senden.

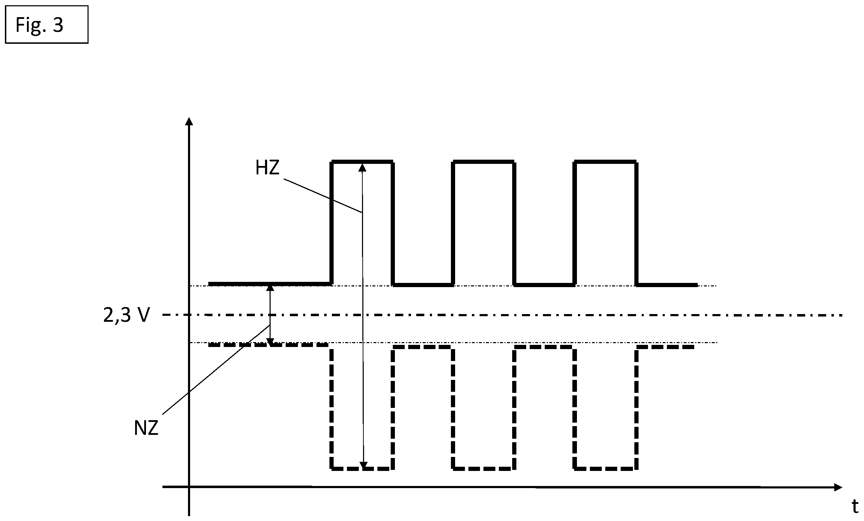

Wie in den Figuren 3 bis 5 dargestellt, wird zum Senden eines Signals in Form eines Bits über den Kommunikationsschaltkreis KS sowohl die COM-High-Leitung 31 als auch die COM-Low-leitung 32 in einen ersten Zustand HZ versetzt. Der erste Zustand HZ für die COM-High-Leitung 31 und für die COM-Low-leitung 32 ist der hohe Zustand, d.h. bei dem eine erste Differenzspannung zwischen 1,5 und 3 Volt beträgt. In dem Ausführungsbeispiel in Figur 3 beträgt dabei die erst Differenzspannung für den ersten (hohen) Zustand HZ 3 Volt.

Der zweite Zustand NZ für die COM-High-Leitung 31 und für die COM-Low-leitung 32 ist der niedrige Zustand, d.h. bei dem eine zweite Differenzspannung zwischen -0,5 und 0,5 Volt beträgt. Ein optimaler Wert für die zweite Differenzspannung ist dabei 0 Volt. In dem Ausführungsbeispiel in Figur 3 beträgt die zweite Differenzspannung für den zweiten (niedrigen) Zustand NZ 0,5 Volt.

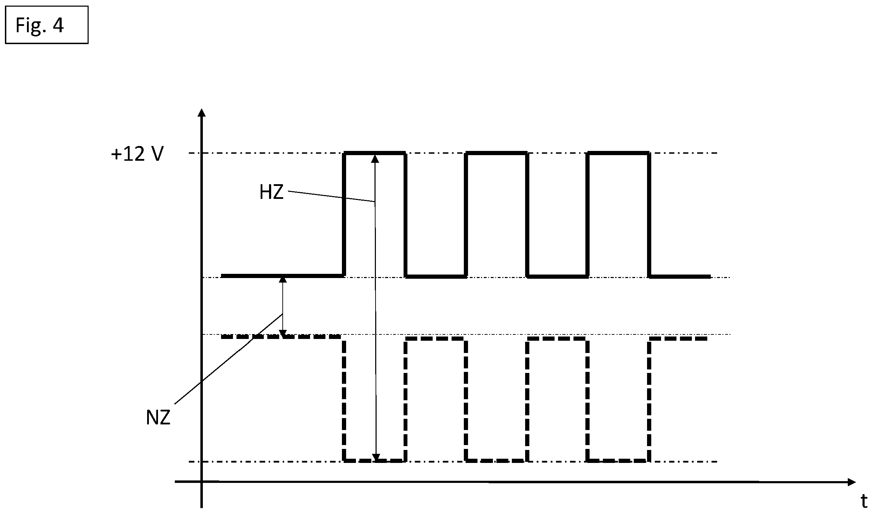

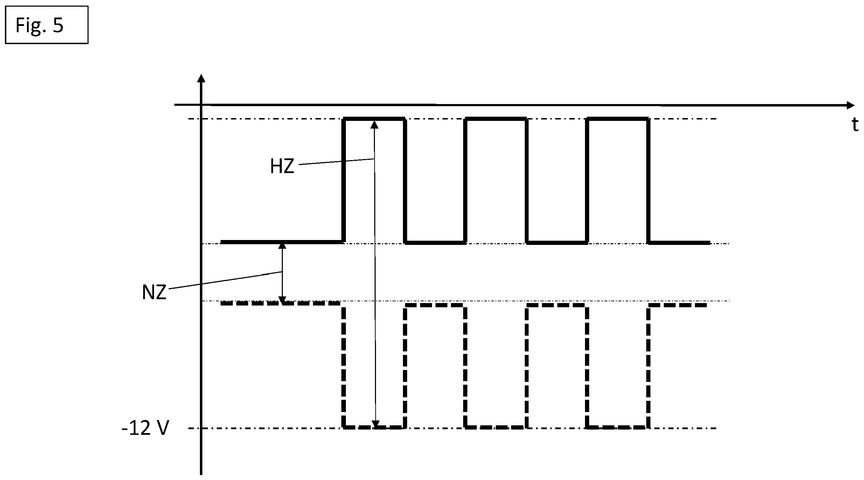

Wie entsprechend in den Figuren 4 und 5 dargestellt kann der maximale Spannungswert in dem ersten Zustand bis zu 12 Volt (d.h. -12 Volt oder +12 Volt) gegenüber dem Massepotential des Akkumulators 3.

## Patentansprüche

1. Werkzeugmaschine (2) mit wenigstens einer Steuerungseinrichtung (9),
**gekennzeichnet durch** wenigstens einen Kommunikationsschaltkreis (KS) zum Austausch von Signalen in einem Halbduplex-Betrieb mit einer ersten und zweiten Kommunikationsleitung (31, 32) für eine differentielle Kommunikation zwischen wenigstens einem ersten sowie zweiten Transceiver (20, 30).

2. Werkzeugmaschine (2) nach Anspruch 1,
**dadurch gekennzeichnet, dass** eine erste Differenzspannung bei der differentiellen Kommunikation für einen ersten Zustand (HZ) zwischen 1,5 bis 3 Volt liegt und eine zweite Differenzspannung für einen zweiten Zustand zwischen -0,5 bis 0,5 Volt liegt.

3. Werkzeugmaschine (2) nach Anspruch 2,
**dadurch gekennzeichnet, dass** wenigstens ein Akkumulator (3) als Energieversorgung der Werkzeugmaschine (2) vorgesehen ist und ein maximaler Spannungswert in dem ersten Zustand bis zu 12 Volt gegenüber dem Massepotential des Akkumulators (3) beträgt.

4. Werkzeugmaschine (2) nach Anspruch 3,
**dadurch gekennzeichnet, dass** der wenigstens erste Transceiver (20) in der Werkzeugmaschine (2) und der wenigstens zweite Transceiver (30) in dem Akkumulator (3) positioniert ist.

5. System (1) enthaltend eine Werkzeugmaschine (2) mit wenigstens einer Steuerungseinrichtung (9) und einen Akkumulator (3) mit wenigstens einer Steuerungselektronik (24), wobei der Akkumulator (3) zur Versorgung der Werkzeugmaschine (2) mit elektrischer Energie ausgestaltet ist,
**gekennzeichnet durch** wenigstens einen Kommunikationsschaltkreis (KS) zum Austausch von Signalen in einem Halbduplex-Betrieb mit einer ersten und zweiten Kommunikationsleitung (31, 32) für eine differentielle Kommunikation zwischen wenigstens einem ersten sowie zweiten Transceiver (20, 30).

6. System (1) nach Anspruch 5,
**dadurch gekennzeichnet, dass** der wenigstens erste Transceiver (20) in der Werkzeugmaschine und der wenigstens zweite Transceiver (30) in dem Akkumulator (3) positioniert ist.

7. System (1) nach Anspruch 5 oder 6,
**dadurch gekennzeichnet, dass** sowohl der wenigstens erste und zweite Transceiver (20, 30) in der Werkzeugmaschine (2) positioniert ist.

8. System (1) nach wenigstens einem der Ansprüche 5 bis 7,
**dadurch gekennzeichnet, dass** eine erste Differenzspannung bei der differentiellen Kommunikation für einen ersten Zustand zwischen 1,5 bis 3 Volt liegt und eine zweite Differenzspannung für einen zweiten Zustand zwischen -0,5 bis 0,5 Volt liegt.

9. System (1) nach wenigstens einem der Ansprüche 5 bis 8,
**dadurch gekennzeichnet, dass** ein maximaler Spannungswert in dem ersten Zustand bis zu 12 Volt gegenüber dem Massepotential des Akkumulators beträgt.

## Claims

1. Machine tool (2) having at least one control device (9),
**characterized by** at least one communication circuit (KS) for interchanging signals in a half-duplex mode with a first and a second communication line (31, 32) for differential communication between at least a first and a second transceiver (20, 30).

2. Machine tool (2) according to Claim 1,
**characterized in that** a first differential voltage during differential communication is between 1.5 and 3 volts for a first state (HZ) and a second differential voltage is between -0.5 and 0.5 V for a second state.

3. Machine tool (2) according to Claim 2,
**characterized in that** at least one rechargeable battery (3) is provided as an energy supply for the machine tool (2), and a maximum voltage value in the first state is up to 12 volts with respect to the earth potential of the rechargeable battery (3).

4. Machine tool (2) according to Claim 3,
**characterized in that** the at least first transceiver (20) is positioned in the machine tool (2) and the at least second transceiver (30) is positioned in the rechargeable battery (3).

5. System (1) containing a machine tool (2) with at least one control device (9) and a rechargeable battery (3) with at least one control electronic system (24), wherein the rechargeable battery (3) is configured to supply the machine tool (2) with electrical energy,
**characterized by** at least one communication circuit (KS) for interchanging signals in a half-duplex mode with a first and a second communication line (31, 32) for differential communication between at least a first and a second transceiver (20, 30).

6. System (1) according to Claim 5,
**characterized in that** the at least first transceiver (20) is positioned in the machine tool and the at least second transceiver (30) is positioned in the rechargeable battery (3).

7. System (1) according to Claim 5 or 6,
**characterized in that** both the at least first and second transceiver (20, 30) are positioned in the machine tool (2).

8. System (1) according to at least one of Claims 5 to 7,
**characterized in that** a first differential voltage during differential communication is between 1.5 and 3 volts for a first state and a second differential voltage is between -0.5 and 0.5 volts for a second state.

9. System (1) according to at least one of Claims 5 to 8,
**characterized in that** a maximum voltage value in the first state is up to 12 volts with respect to the earth potential of the rechargeable battery.

## Revendications

1. Outillage (2) comprenant au moins un dispositif de commande (9),
**caractérisé par** au moins un circuit de communication (KS) pour l'échange de signaux dans un mode semi-duplex avec une première et une deuxième ligne de communication (31, 32) pour une communication différentielle entre au moins un premier et un deuxième émetteur-récepteur (20, 30).

2. Outillage (2) selon la revendication 1,
**caractérisé en ce qu'**une première tension différentielle dans la communication différentielle pour un premier état (HZ) est comprise entre 1,5 et 3 volts et une deuxième tension différentielle pour un deuxième état est comprise entre -0,5 et 0,5 volt.

3. Outillage (2) selon la revendication 2,
**caractérisé en ce qu'**au moins un accumulateur (3) est prévu comme alimentation en énergie de l'outillage (2) et une valeur de tension maximale dans le premier état peut atteindre 12 volts par rapport au potentiel de masse de l'accumulateur (3).

4. Outillage (2) selon la revendication 3,
**caractérisé en ce que** l'au moins premier émetteur-récepteur (20) est positionné dans l'outillage (2) et l'au moins deuxième émetteur-récepteur (30) est positionné dans l'accumulateur (3).

5. Système (1) contenant un outillage (2) avec au moins un dispositif de commande (9) et un accumulateur (3) doté d'au moins une électronique de commande (24), l'accumulateur (3) étant conçu de façon à alimenter l'outillage (2) en énergie électrique, **caractérisé par** au moins un circuit de communication (KS) pour l'échange de signaux dans un mode semi-duplex avec une première et une deuxième ligne de communication (31, 32) pour une communication différentielle entre au moins un premier et un deuxième émetteur-récepteur (20, 30).

6. Système (1) selon la revendication 5,
**caractérisé en ce que** l'au moins un premier émetteur-récepteur (20) est positionné dans l'outillage et l'au moins deuxième émetteur-récepteur (30) est positionné dans l'accumulateur (3).

7. Système (1) selon la revendication 5 ou 6,
**caractérisé en ce que** les au moins premier et deuxième émetteurs-récepteurs (20, 30) sont tous deux positionnés dans l'outillage (2).

8. Système (1) selon au moins l'une des revendications 5 à 7,
**caractérisé en ce qu'**une première tension différentielle dans la communication différentielle est comprise entre 1,5 et 3 volts pour un premier état et une deuxième tension différentielle est comprise entre -0,5 et 0,5 volt pour un deuxième état.

9. Système (1) selon au moins l'une des revendications 5 à 8,
**caractérisé en ce qu'**une valeur de tension maximale dans le premier état est jusqu'à 12 volts par rapport au potentiel de masse de l'accumulateur.
